# EUROPÄISCHE PATENTSCHRIFT

(11) **EP 1 954 496 B1**
(45) Veröffentlichungstag und Bekanntmachung des Hinweises auf die Patenterteilung: **15.05.2013**
(21) Anmeldenummer: 06830024.3
(22) Anmeldetag: 17.11.2006
(51) Int. Cl.: B32B 27/36

(54) **PLA-FOLIE MIT GUTEN ANTISTATISCHEN EIGENSCHAFTEN**
PLA FILM COMPRISING GOOD ANTISTATIC PROPERTIES
FILM PLA AYANT DE BONNES PROPRIETES ANTISTATIQUES

(30) Priorität: 23.11.2005 DE 102005055691
(43) Veröffentlichungstag der Anmeldung: 13.08.2008
(73) Patentinhaber: Treofan Germany GmbH & Co.KG, 66539 Neunkirchen (DE)
(72) Erfinder: BUSCH, Detlef, 66740 Saarlouis (DE); KLEIN, Dominic, 66539 Neunkirchen (DE); SCHMITZ, Bertram, F-75200 Sarreguemines (FR)
(74) Vertreter: Kremer, Viola
(86) Internationale Anmeldenummer: PCT/EP2006/068600
(87) Internationale Veröffentlichungsnummer: WO 2007/060137

(56) Entgegenhaltungen:
- EP-A1- 1 388 562
- WO-A-2004/052646
- DATABASE WPI Week 200547 Derwent Publications Ltd., London, GB; AN 2005-466649 XP002443673 & WO 2005/052056 A1 (ASAHI KASEI LIFE & LIVING CORP) 9. Juni 2005 (2005-06-09)
- DATABASE WPI Week 200437 Derwent Publications Ltd., London, GB; AN 2004-395267 XP002443674 & JP 2004 131726 A (ASAHI KASEI LIFE & LIVING KK) 30. April 2004 (2004-04-30)
- DATABASE WPI Week 200420 Derwent Publications Ltd., London, GB; AN 2004-205732 XP002443675 & JP 2003 145677 A (TOKYO NAKAI SHOJI KK) 20. Mai 2003 (2003-05-20)
- DATABASE WPI Week 200459 Derwent Publications Ltd., London, GB; AN 2004-606710 XP002443676 & JP 2004 223786 A (TOYOBO KK) 12. August 2004 (2004-08-12)

## Beschreibung

Die vorliegende Erfindung betrifft eine biaxial orientierte Folie, aus einer Basisschicht und mindestens einer Deckschicht, welche mindestens ein Polymeres aus mindestens einer aliphatischen Hydroxycarbonsäure enthält. Die Erfindung betrifft ferner ein Verfahren zur Herstellung der Folie sowie ihrer Verwendung.

Folien aus thermoplastischen Kunststoffen werden in großem Umfang zur Verpackung von Lebensmitteln und anderen Packgütern eingesetzt. Für diese Verwendungen ist es wesentlich, daß die Folien gute antistatische und Gleitreibungs-Eigenschaften aufweisen.

Neuere Entwicklungen auf dem Verpackungsgebiet betreffen Folien aus biologisch abbaubaren Polyestern, wie beispielsweise Pölymilchsäure (PLA). Derartige Folien gelten als besonders umweltverträglich, da sie auf nachwachsenden Rohstoffen basieren und durch Kompostierung entsorgt werden können. Diese Materialien unterscheiden sich jedoch grundlegend von den olefinischen Polymeren, wie Polyethylen oder Polypropylen, welche für Verpackungsfolien in großem Umfang eingesetzt werden. Auch die Übertragung der technischen Lehren über Polyesterfolien gelingt oft nicht, da die gleichen oder ähnliche Maßnahmen bei PLA-Folien oft nicht die erwünschte Wirkung erzielen.

Für den wirtschaftlichen Erfolg ist jedoch ein vergleichbar gutes Spektrum an Gebraucheigenschaften erforderlich, damit diese Folie mit den üblichen Verpackungs□technologien verarbeitet werden können. Hier spielt insbesondere die Antistatik in Verbindung mit den Gleiteigenschaften der Folie eine zentrale Rolle. Zahlreiche Untersuchungen haben gezeigt, daß sich die im boPP Bereich üblichen migrierenden Additive, die zur Verbesserung dieser Eigenschaften eingesetzt werden, in PLA-Folien nicht bewähren. Auf Grund des polaren Charakters der PLA-Polymeren zeigen diese migrierenden Additive in der Polymermatrix ein ganz anderes Migrationsverhalten. Häufig gelangen diese Substanzen gar nicht oder in zu geringen Mengen an die Oberfläche der PLA Folie, so daß sie letztlich wirkungslos bleiben.

Des weiteren ist es im Stand der Technik bekannt anorganische oder organische Antiblock-Partikel in den Deckschichten einer Folie als Abstandshalter zwischen einzelnen Folienlagen einzusetzen. Die Antiblock-Partikel können durch Reduzierung der Kontaktfläche zwischen den Folienlagen das Abwickelverhalten einer Folienrolle verbessern und zusätzlich die Reibungseigenschaften zwischen Folienbahn und Führungsschiene an einer Verpackungs□maschine günstig beeinflussen. Im allgemeinen tragen Antiblockmittel jedoch nicht zu verbesserten antistatischen Eigenschaften der Folie bei.

In der deutschen Anmeldung Aktenzeichen 101 21 153.8 wird eine PLA Folie beschrieben, welche besonders hohe Mengen an Glycerinmonostearat zur Verbesserung der Antistatik enthält. Diese Folien sind jedoch noch immer verbesserungsbedürftig.

Der Zusatz von hohen Mengen an Partikeln zur Verbesserung der Reibung ist bei bekannten Polyester-Folien aus Polyethylenterephtalat eine bekannte Lösung, aber auch diese Modifikation bewirkt mit den üblichen Partikeln bei PLA-Folien kein verbesserte Antistatik.

Weiterhin kennt man aus der boPP-Technologie verschiedene wirkungsvolle Kombinationen von migrierenden Additiven und partikelförmigen Antiblockmitteln, die zur Verbesserung von Reibung und Antistatik eingesetzt werden. Im Rahmen der vorliegenden Erfindung wurde jedoch gefunden, daß diese Kombinationen in PLA-Folie, die Antistatik nicht verbessern, teilweise sogar eine schlechtere Wirkung haben, als Partikel oder Additiv jeweils alleine. Es wird vermutet, daß die partikelförmigen Zusatzstoffe in der PLA-Matrix das Migrationsverhalten der Additive beeinflussen, beispielweise scheinen einige Partikelarten die migrierenden Additive zu absorbieren, so daß sie nahezu wirkungslos bleiben.

Die Aufgabe der vorliegenden Erfindung bestand darin, Folien für umweltfreundliche Verpackungen du andere Anwendungen zur Verfügung zu stellen, welche aus nachwachsenden Rohstoffen, wie beispielsweise PLA, hergestellt und umweltfreundlich entsorgt werden können und gute Antistatikeigenschaften aufweisen. Darüber hinaus sind gute Gleiteigenschaften und ein kleiner Reibungskoeffizient wünschenswert. Für bestimmte Anwendungsbereiche sind eine gute Transparenz und hohe Glanzwerte zusätzlich erforderlich.

Die Aufgabe wird gelöst durch eine mehrschichtige, transparente, biaxial orientierte Folie aus einer Basisschicht und mindestens einer Deckschicht, die mindestens ein Polymeres aus einer aliphatischen Hydroxycarbonsäure und 0,002 bis 20 Gew.-% stärke-basierte Partikel bezogen auf das Gewicht der Deckschicht enthält.

Die Aufgabe wird gelöst durch eine mehrschichtige, opake, biaxial orientierte Folie aus einer Basisschicht und mindestens einer Deckschicht, die mindestens ein Polymeres aus einer aliphatischen Hydroxycarbonsäure und 0,002 bis 20 Gew.-% stärke-basierte Partikel bezogen auf das Gewicht der Deckschicht enthält.

Des weiteren ist eine mehrschichtige, unorientierte Folie aus einer Basisschicht und mindestens einer Deckschicht, die mindestens ein Polymeres aus einer aliphatischen Hydroxycarbonsäure und 0,002 bis 20 Gew.-% stärke-basierte Partikel bezogen auf das Gewicht der Deckschicht enthält eine Lösung dieser Aufgabe.

Überraschenderweise verbessert die Zugabe von stärke-basierten Partikeln in mindestens eine Deckschicht die Antistatik der Folie in hervorragender Weise. Derart modifizierte Folien bauen beim Handling und der Verarbeitung eine deutlich geringere elektrostatische Ladung auf, die überraschenderweise deutlich schneller abfließt, als bei herkömmlich aus gerüsteten Folien. Damit können Folien zur Verfügung gestellt werden, die eine sehr gute Antistatik auf weisen und problemlos verarbeitet werden können.

Bevorzugt beträgt der Anteil an stärke-basierten Partikeln in der Deckschicht 0,01 - 10 Gew.-%, insbesondere 0,01 bis 5 Gew.-%, bezogen auf das Gewicht der Deckschicht, um gute antistatische Eigenschaften zu erzielen. Überraschenderweise bewirken auch sehr geringe Mengen von Stärke-basierten Partikeln in einem Bereich von 0,01 bis 1, vorzugsweise 0,1 bis 0,5 Gew.-% eine signifikante Verbesserung der Antistatik. Ist der Partikelgehalt größer als 20 Gew.-%, kommt es zu nachteiligem Einfluß auf die optischen Eigenschaften der Folie, ohne daß sich die Antistatik weiter verbessert. Bei Konzentrationen unter 0,002 Gew.% können nur unzureichende Antistatik□eigenschaften erzielt werden. Stärke-basierte Partikel bedeutet im Sinne der vorliegenden Erfindung, daß die Partikel aus den jeweiligen unmodifizierten Stärkearten auf gebaut sein können. Stärke basierte Partikel umfassen jedoch auch solche Stärken, die durch geeignete Umsetzungen modifiziert sind.

Für die vorliegende Erfindung sind Partikel, die auf Kartoffelstärke, Maisstärke oder Weizenstärke basieren grundsätzlich geeignet, wobei jeweils modifizierte und unmodifizierte Stärkearten verwendet werden können. Die ursprüngliche Teilchengröße der Partikel ist vergleichsweise unkritisch, da die Stärkepartikel im Extruder vor der Folienextrusion noch weiter zerkleinert werden. Die Stärkepartikel weisen in der Folie im allgemeinen eine absolute Teilchengröße von 1 bis 15 um auf, wobei naturgemäß auch eine geringe Menge an Teilchen außerhalb dieses Bereich vorliegen kann. Derartige Verteilungen der Partikelgröße stellen sich im allgemeinen immer beim Zerkleinern von Teilchen ein. Der überwiegende Anteil der Teilchen wird jedoch auf eine Teilchengröße von unter 15µm zerkleinert, so daß die Teilchen vorzugsweise Partikelgrößen im Bereich von 1 bis 10µm. Die ursprüngliche mittlere Teilchengröße kann bis zu 100µm, vorzugsweise 1 bis 70µm betragen. Grundsätzlich können die Partikel eine beliebige, regelmäßige oder unregelmäßige Teilchenform auf weisen, im allgemeinen sind jedoch ellipsoide, ovale bis runde Teilchenformen bevorzugt.

Für die Zwecke der vorliegenden Erfindung sind Partikel aus Kartoffelstärke bevorzugt, insbesondere modifizierte Kartoffelstärke, wie beispielsweise Dextrin-Partikel. Das Dextrose-Equivalent der Partikel beträgt vorzugsweise 5 - 20 Gew.-%, insbesondere 8 - 14 Gew.-% (Bestimmt nach der Luff-Schoorl Methode). Wässrige Dispersionen dieser Partikel reagieren sauer, der pH-Wert einer 35,2 Gew.% Dispersion der Dextrin-Partikel in destilliertem Wasser beträgt 1,8-2,5. Die Partikel weisen auf Grund der Modifizierung einen erhöhten löslichen Anteil auf, beispielsweise von 70-90 Gew.-% (Gemessen an einer 1%-igen Lösung der Stärke-Partikel in destilliertem Wasser bei 20°C).

In einer weiteren Ausführungsform können zusätzlich zu den stärkebasierten Partikeln weitere übliche organische oder anorganische Antiblockmittel, wie beispielsweise Glimmer, Silikate, Calciumsilikat, PMMA-Teilchen, vernetzte Silikone, (Wollastonit) in der Deckschicht eingesetzt werden.

Die Dicke der Deckschicht liegt im allgemeinen in einem Bereich von 0,5 bis 10 um, vorzugsweise 0,5 - 6µm, insbesondere 1 bis 3µm. Je dicker die Deckschicht ist, desto größer sollte der Durchmesser der Stärke-Partikel gewählt werden.

Die antistatisch ausgerüstet Deckschicht enthält 70 bis <100 Gew.-%, vorzugsweise 80 bis <99 Gew.-% eines Polymeren aus mindestens einer aliphatischen Hydroxy□carbonsäuren, nachstehend PHC (Polyhydroxycarbonsäuren) genannt. Hierunter sind Homopolymere oder Mischpolymerisate zu verstehen, welche aus polymerisierten Einheiten von aliphatischen Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff PLA sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Geeignet sind Polymilchsäuren, welche ausschließlich aus Milchsäureeinheiten aufgebaut sind. Hierbei sind insbesondere PLA Homopolymere bevorzugt, welche 80 - 100 Gew.-% L-Mlchsäureeinheiten, entsprechend 0 bis 20 Gew.-% D-Michsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxy□carbonsäureeinheiten als Comonomer aufweisen, beispielsweise Glycolsäureeinheiten, 3-Hydroxypropansäureeinhaiten, 2,2-Dimethyl-3-hydroxy□propan□säureeinheiten oder höhere Homologe der Hydroxycarbonsäuren mit bis zu 5 Kohlenstoffatomen.

Bevorzugt sind Milchsäurepolymere (PLA) mit einem Schmelzberreich von 110 bis 170°C, vorzugs□weise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangs□temperatur Tg liegt in einem Bereich von 40 bis 100°C, vorzugsweise 40 bis 80°C.

Die erfindungsgemäße Folie ist mehrschichtig aufgebaut und umfaßt mindestens die Basisschicht und mindestens eine antistatisch ausgerüstete Deckschicht aus PHC und stärke-basierten Partikeln. Gegebenenfalls kann auf der gegenüberliegenden Seite der Folie eine weitere Deckschicht aufgebracht sein, wobei diese zweite Deckschicht ebenfalls antistatisch mit stärke-basierten Partikeln ausgerüstet oder anderes rezepturiert sein kann. Des weiteren ist es möglich zwischen der Basisschicht und der oder den Deckschichten zusätzlich eine oder beidseitig Zwischenschichten anzubringen, wodurch vier oder fünfschichtige Folien erhalten werden.

Die Basisschicht ist im Sinne der vorliegenden Erfindung diejenige Schicht, welche die größte Schichtdicke aufweist und im allgemeinen mehr als 40 % bis 98 %, vorzugsweise 50 bis 90 %, der Gesamtfoliendicke ausmacht. Die Deckschichten sind die Schichten, welche die äusseren Schichten der Folie bilden. Zwischenschichten sind naturgemäß zwischen der Basisschicht und den Deckschichten angebracht. Gegebenenfalls können in einem separaten Verarbeitungs schritt Beschichtungen auf die antistatische Oberfläche der besagten Deckschicht aufgebracht werden.

Unter transparenten Folien werden im Sinne der vorliegenden Erfindung solche Folien verstanden, deren Lichtdurchlässigkeit nach ASTM-D 1003-77 über 75 %, vorzugsweise über 95 %, liegt. Es wurde gefunden, daß die Enarbeitung der stärke-basierten Partikel in die Deckschicht die Trübung der Folie nicht oder nur unwesentlich erhöht.

Die Basisschicht der Folie enthält im allgemeinen mindestens 70 bis <100 Gew.-%, vorzugsweise 85 bis 99 Gew. -%, bezogen auf das Gewicht der Schicht, Polymere aus mindestens einer Hydroxycarbonsäuren, nachstehend PHC (Polyhydroxy□carbonsäuren) genannt. Hierunter sind Homopolymere oder Mischpolymerisate zu verstehen, welche aus polymerisierten Einheiten von, vorzugsweise aliphatischen, Hydroxycarbonsäuren aufgebaut sind. Unter den für die Basisschicht geeigneten PHC sind insbesondere Polymilchsäuren geeignete, darunter sowohl Homopolymere, welche nur aus Michsäureeinheiten aufgebaut sind, als auch Mischpolymerisate, welche überwiegend Michsäureeinheiten (>50%) in Verbindungen mit anderen aliphatischen Hydroxydicarbonsäuren oder auch anderen Dicarbonsäuren enthalten.

Die Basisschicht sowie die übrigen Schichten der Folie, einschließlich der antistatisch ausgerüsteten Deckschicht können zusätzlich übliche Additive, wie Neutralisation□s□mittel, Stabilisatoren, Gleitmittel und Füllstoffe, enthalten. Sie werden zweckmäßig dem Polymer bzw. der Polymermischung bereits vor dem Aufschmelzen zugesetzt. Als Prozeßhilfsmittel werden innere Gleitmittel, wie beispielsweise Erucasäureamide oder Glycerinmonostearat eingesetzt.

Grundsätzlich können auch weiße oder opake Ausführungsformen der Folie einseitig oder beidseitig mit der antistatisch ausgerüsteten Deckschicht versehene werden. Für diese Ausführungsformen werden der Basisschicht Pigmente und/oder vakuolen□initierende Füllstoffe zugesetzt werden. Als Pigment ist TiO₂ bevorzugt und wird in einer Menge von bis zu 10 Gew.-%, vorzugsweise 1 bis 8 Gew.-%, jeweils bezogen auf die Basisschicht, eingesetzt. Vakuoleninitierende Füllstoffe sind vorzugsweise Cycloolefincopolymere, im allgemeinen in einer Menge von 0,5 bis 30Gew.-% bezogen auf das Gewicht der Basisschicht. Einzelheiten hierzu sind in der DE 101 21 150 beschrieben, auf welche hiermit asdrücklich Bezug genommen wird.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die Dicke der Deckschicht/en wird unabhängig von den anderen Schichten gewählt und liegt jeweils bevorzugt im Bereich von 0,1 bis 5 µm, insbesondere 0,2 bis 3 µm, wobei die zweite Deckschicht bezüglich Dicke und Zusammensetzung verschieden von der ersten Deckschicht sein kann. Die angegebenen Werte beziehen sich jeweils auf eine Zwischen- oder Deckschicht. Die Dicke der Basisschicht ergibt sich entsprechend aus der Differenz von Gesamtdicke der Folie und der Dicke der aügebrachten Deck- und Zwischenschicht/en und kann daher analog der Gesamtdicke innerhalb weiter Grenzen variieren.

Grundsätzlich sind biaxial orientierte Ausführungsformen der erfindungsgemäßen Folie bevorzugt. Die vorteilhafte Wirkung der stärke-basierten Partikel in der Deckschicht verbessert jedoch auch die Antistatik von mehrschichtigen Folien mit dem vorstehend beschriebenen Schichtaufbau, welche nur in eine Richtung, beispielsweise nur in Längsrichtung oder nur in Querrichtung, oder in keine Richtung orientiert sind, d.h. bei sogenannten unorientierten Cast-Folien.

Die Erfindung betrifft weiterhin ein Verfahren zur Herstellung der erfindungsgemäßen mehrschichtigen Folie nach dem an sich bekannten Koextrusionsverfahren, welches nachstehend am Beispiel einer biaxial orientierten Folie im Enzelnen beschrieben wird.

Im Rahmen dieses Verfahrens wird so vorgegangen, dass die den Schichten der Folie entsprechende Schmelze/n durch eine Flachdüse koextrudiert werden, die so erhaltene mehrschichtige Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentieller Streckung.

Die Schmelze/n wer□den durch eine Flachdüse (Breitschlitz□düse) gepreßt, und die aus□gepreßte Folie wird auf einer oder mehreren Abzugs□walzen bei einer Temperatur von 10 bis 100°C, vorzugsweise 20 bis 80°C, abgezogen, wobei sie ab□kühlt und sich verfestigt.

Die so erhaltene Folie wird dann längs und quer zur Extrusionsrichtung ge□streckt. Das Längs□strecken wird man vorzugs□weise bei einer Walzentemperatur der Streckwalzen von 40 bis 130°C, vorzugsweise 50 bis 100°C zweck□mä□ßigerweise mit Hilfe zweier ent□spre□chend dem angestrebten Streckverhältnis verschieden schnell laufender Wal□zen durch□führen und das Querstrecken vorzugsweise bei einer Temperatur von 50 bis 130°C, vorzugsweise 60 bis 120°C mit Hilfe eines entspre□chenden Kluppen□rah□mens. Die Längsstrec□kverhältnisse können Bereich von 1,5 bis 8 variiert werden. Bei der Herstellung von Folien mit einer Basisschicht, die vakouleninitierende Füllstoffe enthält, ist ein höheres Längsstreckverhältnis von 2 bis 5 bevorzugt, wohingegen Folien mit einer transparenten Basisschicht vorzugsweise im Bereich von 1,5 bis 3,5 verstreckt werden. Die Querstreckverhält□nisse liegen im Bereich von 3 bis 10, vorzugsweise 4 bis 7.

An die Streckung der Folie schließt sich ihre Thermofixierung (Wärmebe□hand□lung) an, wobei die Folie konvergierend etwa 0,1 bis 10 s lang bei einer Temperatur von 60 bis 150°C gehalten wird (Konvergenz bis zu 25%). Anschließend wird die Folie in üblicher Weise mit einer Aufwickeleinrichtung aufgewickelt.

Es hat sich als besonders vorteilhaft erwiesen die stärke-basierten Partikel über ein Konzentrat in die Deckschicht der Folie einzuarbeiten. Die Konzentrate können auf vergleichbaren Mlchsäurepolymeren wie die Deckschicht oder die Basisschicht basieren. Gegebenenfalls ist auch der Einsatz von Mischungen Polyhydroxycarbonsäuren und stärke-basierten Partikel möglich, welche die Partikel in einer Menge von 0,002 bis 20 Gew.-% bezogen auf das Masterbatch, enthalten.

Es wurde gefunden, daß die stärke-basierten Partikel im Extruder durch Scherung zerkleinert werden und eine andere Größenverteilung der Partikel in der Folie gegenüber dem Ausgangsmaterial erzielt wird. Damit können die optischen Eigenschaften der Folie, die Antistatik und andere Egenschaften, die auch von der Partikelverteilung abhängen, durch die Extrusionsbedingungen bei der Folienherstellung beeinflußt werden.

Gegebenenfalls kann zur Einstellung weiterer Eigenschaften die Folie beschichtet werden. Typische Beschichtungen sind haftvermittelnde, schlupfverbessernd oder dehäsiv wirkende Schichten. Gegebenenfalls können diese zusätzlichen Schichten über in-line coating mittels wässriger Dispersionen vor der Querverstreckung oder off-line aufgetragen werden.

Die erfindungsgemäße Folie zeichnet sich durch sehr gute antistatische Eigenschaften aus. Hierdurch ist ein gute Handhabung der Folie beim Herstellen, Wickeln und Verarbeiten möglich. Daneben weisen transparente Ausführungsformen der erfindungsgemäßen Folie eine sehr gute Transparenz auf, welche durch den Zusatz der stärke-basierten Partikeln in der Deckschicht überraschenderweise nicht beeinträchtigt wird. Zusätzlich zeigt sich, daß es bei der Herstellung der Folie nicht zu Problemen durch Ablagerungen oder Ausdampfungen kommt..Überraschenderweise zeigt die Folie die guten antistatischen Eigenschaften bereits unmittelbar nach der Herstellung. Diese vorteilhafte Antistatik ist auch zeitlich stabil. Auch dies ist ein klarer Vorteil gegenüber Folien deren Antistatik sich erst nach dem Ablauf von Migrationsvorgängen einstellt. Es wurde gefunden, daß durch den Zusatz von stärke-basierten Partikeln der spezifische Oberflächen□widerstand der Folie, gegenüber dem entsprechenden spezifische Oberflächen□widerstand von PLA, reduziert wird. Der spezifische Oberflächenwiderstand liegt erfindungsgemäß unterhalb von 10¹³ W/m². Des weiteren zeigt die Folie eine gute, d.h. niedrige Gleitreibung, wodurch die Lauf- und Verarbeitungseigenschaften zusätzlich günstig beeinflußt werden.

Durch diese vorteilhafte Antistatik kann die Folie für verschiedenste Verwendungszwecke eingesetzt werden, insbesondere als Verpackungsfolie, sowie für weitere Verarbeitungsschritte wie bedrucken, laminieren oder kaschieren. Bei der Verwendung als Etikettenfolie ist die gute Antistatik gleichfalls von Vorteil. Die Folie kann daher sowohl als Haftetikett mit einer Kleberbeschichtung, als schrumpfendes Rundumetikett, als Spot Patch Etikett oder grundsätzlich auch in den bekannten In-Mold Prozeßen eingesetzt werden.

Zur Charakterisierung der Folien wurden die folgenden Messwerte benutzt:

Antistatik:

Die Messung der maximalen elektrostatischen Aufladung, des relativen Ladungs□abflusses über die Zeit und dem daraus resultierenden Oberflächenwiderstand wurde dem Gerät Qumat 428 Statics gemessen in Anlehnung an DIN 53486. Dabei wird die Ladungstrennung durch eine schnellrotierende Nylon-Bürste, die über die Folie reibt erzielt. Dieser Vorgang dauert 30 s, wobei die Bürste 10 mal rotierend über ein Folienstück der Abmessung 21 cm Länge und 8 cm Breite fährt. Die unmittelbar nach Beendigung der Ladungstrennung gemessene Spannung zwischen Bürste und Folie wird als maximale Aufladung bezeichnet; der prozentuale Abfall der Spannung in dem darauffolgenden Zeitraum von 20s als die relative Entladung. Über ein Computer□programm wird aus der Entladungskurve der Oberflächenwiderstand bestimmt.

Reibung

Die Messung des Reibungskoeffizienten erfolgt gemäß ISO 8295.

Glanz

Der Glanz wurde nach DIN 67530 bei einem Winkel von 20° gemessen

Die Erfindung wird nachstehend an Hand von Ausführungsbeispielen erläutert

Beispiel 1:

Es wurde durch Extrusion und anschließende stufenweise Orientierung in Längs- und Querrichtung eine transparente dreischichtige PLA-Folie mit einer Dicke von etwa 30 µm hergestellt. Die Basisschicht bestand zu nahezu 100 Gew.-% aus einer Polymilchsäure mit einem Schmelz□punkt von etwa 160 °C. Die Schicht enthielt zusätzlich Stabilisatoren und Neutralisationsmittel in üblichen Mengen. Die beiden siegelfähigen Deckschichten waren im wesentlichen aus einer amorphen Polymilchsäure aufgebaut, wobei diese Polymilchsäure ein L/D-Verhältnis von ca. 40/60 aufweist. Zusätzlich enthielten die Deckschichten jeweils 0,1 Gew.% stärke-basierte Partikeln und 2 Gew.-% Glycerinmonostearat (GMS). Die Dicke der Deckschichten betrug jeweils 2,5µm.

Die Herstell□bedingungen in den einzelnen Verfahrensschritten waren: .

Extrusion: Temperaturen 170 - 200°C

Temperatur der Abzugswalze: 60°C

Längsstreckung: Temperatur: 68 °C

Längsstreckverhältnis: 2,0

Querstreckung: Temperatur: 88 °C

Querstreckverhältnis (effektiv): 5,5

Fixierung: Temperatur: 75 °C

Konvergenz: 5 %

Auf diese Weise wurde eine transparente Folie mit charakteristischem Glanz *erhalten.* Die Egenschaften der Folie sind in der Tabelle angegeben.

Beispiel 2:

Es wurde eine dreischichtige Folie wie in Beispiel 1 beschrieben hergestellt. Im Unterschied zu Beispiel 1 wurde der Gehalt an stärke-basierten Partikeln auf 0,04 Gew.-% gesenkt. Im übrigen wurde die Zusammensetzung und die Struktur, sowie die Herstellbedingungen beibehalten. Es wurde ebenfalls eine transparente Folie erhalten.

Vergleichsbeispiel 1

Es wurde eine dreischichtige Folie wie in Beispiel 1 beschrieben hergestellt. Im Unterschied zu Beispiel 1 wurden anstatt der stärke-basierten Partikel jeweils 0,04 Gew.-% SiO2 (Grace Sylobloc 45) als Antiblockmittel in beide Deckschichten eingearbeitet. Im übrigen wurde die Zusammensetzung und die Struktur, sowie die Herstellbedingungen beibehalten. Es wurde ebenfalls eine transparente Folie erhalten.

Vergleichsbeispiel 2

Es wurde eine dreischichtige Folie wie in Beispiel 1 beschrieben hergestellt. Im Unterschied zu Beispiel 1 wurden anstatt der stärke-basierten Partikel 0,1 Gew. % Silicapartikel (Seostar KP 150) in beide Deckschichten eingearbeitet. Im übrigen wurde die Zusammensetzung und die Struktur, sowie die Herstellbedingungen beibehalten. Es wurde ebenfalls eine transparente Folie erhalten.

Vergleichsbeispiel 3

Es wurde eine dreischichtige Folie wie in Beispiel 1 beschrieben hergestellt. Im Unterschied zu Beispiel 1 wurden kein Antiblockmittel und keine anderen Zusatzstoffe in beide Deckschichten eingearbeitet. Im übrigen wurde die Zusammensetzung und die Struktur, sowie die Herstellbedingungen beibehalten. Es wurde ebenfalls eine transparente Folie erhalten.

Tabelle 1

**Tabelle 1**

| Beispiel | Trübu ng | Oberflächen□ widerstand in * 10¹¹ Ohm | Max. Aufladung in KV/m | Rel. Entladung nach 20 s in % | Dynamischer Reibungs-koeffizien t nach ISO 8295 |
|---|---|---|---|---|---|
| Bsp. 1 | 1,17 | 2,6 | 40 | 54 | O,16 |
| Bsp. 2 | 0,8 | 9,9 | 50 | 18 | 0,20 |
| VB. 1 | 1,1 | 21 | 53 | 1 | 0,52 |
| VB.2 | 1,2 | 30 | 152 | 1 | 0,6 |
| VB. 3 | 0,8 | 24 | 205 | 4 | 0,7 |

## Patentansprüche

1. Mehrschichtige transparente biaxial orientierte Folie aus einer Basisschicht und mindestens einer Deckschicht, **dadurch gekennzeichnet, daß** die Deckschicht mindestens ein Polymeres aus mindestens einer aliphatischen Hydroxycarbonsäure und 0,002 bis 20 Gew.-% stärke-basierte Partikel bezogen auf das Gewicht der Deckschicht enthält.

2. Mehrschichtige opake biaxial orientierte Folie aus einer Basisschicht und mindestens einer Deckschicht, **dadurch gekennzeichnet, daß** die Deckschicht mindestens ein Polymeres aus mindestens einer aliphatischen Hydroxycarbonsäure und 0,002 bis 20 Gew.-% stärke-basierte Partikel bezogen auf das Gewicht der Deckschicht enthält.

3. Folie nach Anspruch 1 oder 2 **dadurch gekennzeichnet, daß** der Gehalt an stärke-basierten Partikel 0,01 bis 5 Gew.-%, bezogen auf das Gewicht der Deckschicht beträgt.

4. Folie nach einem der Ansprüche 1 bis 3, **dadurch gekennzeichnet, daß** die stärke-basierten Partikel aus Kartoffelstärke, Maisstärke oder Weizenstärke aufgebaut sind.

5. Folie nach einem der Ansprüche 1 bis 4, **dadurch gekennzeichnet, daß** die stärke-basierten Partikel in der Deckschicht eine Partikel□größe von 1 bis 15µm aufweisen.

6. Folie nach einem der Ansprüche 1 bis 5, **dadurch gekennzeichnet, daß** die stärke-basierten Partikel eine ellipsoide oder kugelförmige Gestalt haben.

7. Folie nach einem der Ansprüche 1 bis 6, **dadurch gekennzeichnet, daß** die Stärke unmodifiziert ist.

8. Folie nach einem der Ansprüche 1 bis 7, **dadurch gekennzeichnet, daß** die Stärke modifiziert ist.

9. Folien nach einem der Ansprüche 1 bis 8, **dadurch gekennzeichnet, daß** die stärke-basierten Partikel aus modifizierter Kartoffelstärke aufgebaut sind.

10. Folien nach einem der Ansprüche 1 bis 9, **dadurch gekennzeichnet, daß** die Deckschicht 70 bis <100 Gew.-% eines Polymeren aus aliphatischer Hydroxy□carbonsäure enthält

11. Folie nach einem der Ansprüche 1 bis 10, **dadurch gekennzeichnet, daß** die aliphatische Hydroxycarbonsäure ein PLA ist.

12. Folie nach einem der Ansprüche 1 bis 11, **dadurch gekennzeichnet, daß** die Basisschicht transparent ist und 90 bis <100Gew,-% einer Polyhydroxycarbonsäure, vorugsweise PLA enthält.

13. Folie nach einem der Ansprüche 2 bis 11, **dadurch gekennzeichnet, daß** die Basisschicht opak ist und zusätzlich vakuoleninitierenden Füllstoff enthält.

14. Folie nach einem der Ansprüche 1 bis 13, **dadurch gekennzeichnet, daß** die Deckschicht eine Dicke von 0,5 bis 10 µm hat

15. 15, Folie nach einem der Ansprüche 1 bis 14, **dadurch gekennzeichnet, daß** die Deckschicht siegelfähig ist.

16. Mehrschichtige Folie nach Anspruch 1 oder 2 aus einer Basisschicht und mindestens einer Deckschicht, welche nur in Längsrichtung orientiert ist, **dadurch gekennzeichnet, daß** die Deckschicht mindestens ein Polymeres aus mindestens einer aliphatischen Hydroxycarbonsäure und 0,002 bis 20 Gew.-% stärke-basierte Partikel, bezogen auf das Gewicht der Deckschicht enthält,

17. Mehrschichtige Folie nach Anspruch 1 oder 2 aus einer Basisschicht und mindestens einer Deckschicht, welche nur in Querrichtung orientiert ist, **dadurch gekennzeichnet, daß** die Deckschicht mindestens ein Polymeres aus mindestens einer aliphatischen Hydroxycarbonsäure und 0,002 bis 20 Gew.-% stärke-basierte Partikel, bezogen auf das Gewicht der Deckschicht enthält.

18. Mehrschichtige unorientierte Folie nach Anspruch 1 oder 2 aus einer Basisschicht und mindestens einer Deckschicht, **dadurch gekennzeichnet, daß** die Deckschicht mindestens ein Polymeres aus mindestens einer aliphatischen Hydroxycarbonsäure und 0,002 bis 20 Gew.-% stärke-basierte Partikel, bezogen auf das Gewicht der Deckschicht enthält.

19. Verwendung einer Folie nach einem der Ansprüche 1 bis 18 als Verpackungs□folie.

20. Verwendung einer Folie nach einem der Ansprüche 1 bis 18 als Etikettenfolie.

21. Verfahren zur Herstellung einer Folie nach einem der Ansprüche 1 bis 18, **dadurch gekennzeichnet, daß** die Stärke-basierten Partikel im Extruder durch Scherung auf einer Partikelgröße von 1 bis 15µm zerkleinert werden

## Claims

1. Multilayered, transparent, biaxially-oriented film of one base layer and at least one top layer, **characterised in that** the top layer contains at least one polymer of at least one aliphatic hydroxycarboxylic acid and 0.002 to 20% by weight starch-based particles relative to the weight of the top layer.

2. Multilayered, opaque, biaxially-oriented film of one base layer and at least one top layer, **characterised in that** the top layer contains at least one polymer of at least one aliphatic hydroxycarboxylic acid and 0.002 to 20% by weight starch-based particles relative to the weight of the top layer.

3. Film according to claim 1 or 2, **characterised in that** the content of starch-based particles comes to 0.01 to 5% by weight relative to the weight of the top layer.

4. Film according to one of the claims 1 to 3, **characterised in that** the starch-based particles are made up of potato starch, maize starch or wheat starch.

5. Film according to one of the claims 1 to 4, **characterised in that** the starch-based particles in the top layers have a particle size of 1 to 15 µm.

6. Film according to one of the claims 1 to 5, **characterised in that** the starch-based particles have an ellipsoid or spherical shape.

7. Film according to one of the claims 1 to 6, **characterised in that** the starch is unmodified.

8. Film according to one of the claims 1 to 7, **characterised in that** the starch is modified.

9. Film according to one of the claims 1 to 8, **characterised in that** the starch-based particles are made up of modified potato starch.

10. Film according to one of the claims 1 to 9, **characterised in that** the top layer contains 70 to <100% by weight of a polymer of aliphatic hydroxycarboxylic acid.

11. Film according to one of the claims 1 to 10, **characterised in that** the aliphatic hydroxycarboxylic acid is a PLA.

12. Film according to one of the claims 1 to 11, **characterised in that** the base layer is transparent and contains 90 to <100% by weight of a polyhydroxycarboxylic acid, preferably PLA.

13. Film according to one of the claims 2 to 11, **characterised in that** the base layer is opaque and additionally contains vacuole-initiating filler.

14. Film according to one of the claims 1 to 13, **characterised in that** the top layer has a thickness of 0.5 to 10 µm.

15. Film according to one of the claims 1 to 14, **characterised in that** the top layer is sealable.

16. Multilayered film according to claim 1 or 2 of a base layer and at least one top layer, which is oriented only in the longitudinal direction, **characterised in that** the top layer contains at least one polymer of at least one aliphatic hydroxycarboxylic acid and 0.002 to 20% by weight starch-based particles, relative to the weight of the top layer.

17. Multilayered film according to claim 1 or 2 of a base layer and at least one top layer, which is oriented only in the lateral direction, **characterised in that** the top layer contains at least one polymer of at least one aliphatic hydroxycarboxylic acid and 0.002 to 20% by weight starch-based particles, relative to the weight of the top layer.

18. Multilayered, non-oriented film according to claim 1 or 2 of a base layer and at least one top layer, **characterised in that** the top layer contains at least one polymer of at least one aliphatic hydroxycarboxylic acid and 0.002 to 20% by weight starch-based particles, relative to the weight of the top layer.

19. Use of a film according to one of the claims 1 to 18 as packaging film.

20. Use of a film according to one of the claims 1 to 18 as labelling film.

21. Procedure for manufacturing a film according to one of the claims 1 to 18, **characterised in that** the starch-based particles are cut down to a particle size of 1 to 15 µm by shearing in the extruder.

## Revendications

1. Feuille multicouche transparente et biaxialement orientée, constituée d'une couche de base et d'au moins une couche de couverture, **caractérisée en ce que** ladite couche de couverture contient au moins un polymère constitué d'au moins un acide carboxylique hydroxylé aliphatique et 0,002 à 20 % en poids de particules à base d'amidon, par rapport au poids de la couche de couverture.

2. Feuille multicouche opaque et biaxialement orientée, constituée d'une couche de base et d'au moins une couche de couverture, **caractérisée en ce que** ladite couche de couverture contient au moins un polymère constitué d'au moins un acide carboxylique hydroxylé aliphatique et 0,002 à 20 % en poids de particules à base d'amidon, par rapport au poids de la couche de couverture.

3. Feuille selon les revendications 1 ou 2, **caractérisée en ce que** la teneur en particules à base d'amidon est comprise entre 0,01 et 5 % en poids, par rapport au poids de ladite couche de couverture.

4. Feuille selon l'une des revendications 1 à 3, **caractérisée en ce que** les particules à base d'amidon sont constituées d'amidon de pomme de terre, d'amidon de maïs ou d'amidon de blé.

5. Feuille selon l'une des revendications 1 à 4, **caractérisé en ce que** les particules à base d'amidon dans la couche de couverture présentent une taille de particules comprise entre 1 et 15 µm.

6. Feuille selon l'une des revendications 1 à 5, **caractérisée en ce que** les particules à base d'amidon ont une forme ellipsoïde ou sphérique.

7. Feuille selon l'une des revendications 1 à 6, **caractérisée en ce que** ledit amidon n'est pas modifié.

8. Feuille selon l'une des revendications 1 à 7, **caractérisée en ce que** ledit amidon est modifié.

9. Feuilles selon l'une des revendications 1 à 8, **caractérisées en ce que** les particules à base d'amidon sont constituées d'amidon de pomme de terre modifié.

10. Feuilles selon l'une des revendications 1 à 9, **caractérisées en ce que** ladite couche de couverture contient 70 à < 100 % en poids d'un polymère constituée d'acide carboxylique hydroxylé aliphatique.

11. Feuille selon l'une des revendications 1 à 10, **caractérisée en ce que** ledit acide carboxylique hydroxylé aliphatique est d'un acide polylactique.

12. Feuille selon l'une des revendications 1 à 11, **caractérisée en ce que** la couche de base est transparente et contient 90 à < 100 % en poids d'un acide polycarboxylique, préférentiellement d'acide polylactique.

13. Feuille selon l'une des revendications 2 à 11, **caractérisée en ce que** la couche de base est opaque et contient en outre une charge initiatrice de vacuoles.

14. Feuille selon l'une des revendications 1 à 13, **caractérisée en ce que** la couche de couverture présente une épaisseur comprise entre 0,5 et 10 µm.

15. Feuille selon l'une des revendications 1 à 14, **caractérisée en ce que** la couche de couverture est apte au scellement.

16. Feuille multicouche selon les revendications 1 ou 2, constituée d'une couche de base et d'au moins une couche de couverture laquelle n'est orientée que dans le sens longitudinal, **caractérisée en ce que** ladite couche de couverture contient au moins un polymère constitué d'au moins un acide carboxylique hydroxylé aliphatique et 0,002 à 20 % en poids de particules à base d'amidon, par rapport au poids de la couche de couverture.

17. Feuille multicouche selon les revendications 1 ou 2, constituée d'une couche de base et d'au moins une couche de couverture laquelle n'est orientée que dans le sens transversal, **caractérisée en ce que** ladite couche de couverture contient au moins un polymère constitué d'au moins un acide carboxylique hydroxylé aliphatique et 0,002 à 20 % en poids de particules à base d'amidon, par rapport au poids de la couche de couverture.

18. Feuille multicouche non-orientée selon les revendications 1 ou 2, constituée d'une couche de base et d'au moins une couche de couverture, **caractérisée en ce que** ladite couche de couverture contient au moins un polymère constitué d'au moins un acide carboxylique hydroxylé aliphatique et 0,002 à 20 % en poids de particules à base d'amidon, par rapport au poids de la couche de couverture.

19. Utilisation d'une feuille selon l'une des revendications 1 à 18 en tant que feuille d'emballage.

20. Utilisation d'une feuille selon l'une des revendications 1 à 18 en tant que feuille pour étiquettes.

21. Procédé de fabrication d'une feuille selon l'une des revendications 1 à 18, **caractérisé en ce que** les particules à base d'amidon sont broyées par l'action de cisaillement d'une extrudeuse jusqu'à atteindre une taille de particules comprise entre 1 et 15 µm.
